# EUROPÄISCHE PATENTSCHRIFT

(11) **EP 2 946 960 B1**
(45) Veröffentlichungstag und Bekanntmachung des Hinweises auf die Patenterteilung: **05.04.2017**
(21) Anmeldenummer: 15000364.8
(22) Anmeldetag: 07.02.2015
(51) Int. Cl.: B60K 6/485, B60L 3/00, B60L 11/14, B60L 15/20, F02N 11/00, F02N 11/04, H02K 7/00

(54) **Antriebsstrangmodul für ein Kraftfahrzeug**
Power transmission module for a motor vehicle
Module de chaîne cinématique pour un véhicule automobile

(30) Priorität: 22.05.2014 DE 102014007435
(43) Veröffentlichungstag der Anmeldung: 25.11.2015
(73) Patentinhaber: MAN Truck & Bus AG, 80995 München (DE)
(72) Erfinder: Burkhardt, Wolfgang, 91522 Ansbach (DE)
(74) Vertreter: v. Bezold & Partner Patentanwälte - PartG mbB

(56) Entgegenhaltungen:
- EP-A2- 1 355 062
- EP-A2- 2 020 334

## Beschreibung

Die Erfindung betrifft ein Antriebsstrangmodul für ein Kraftfahrzeug, insbesondere eine Anordnung aus einem Schwungrad und einem Kurbelwellen-Startergenerator.

Um die erste Gemischbildung, Zündung und Verbrennung in einem Verbrennungsmotor zu ermöglichen, werden Verbrennungsmotoren durch eine äußere Kraftquelle auf eine vorgegebene Mindestdrehzahl gebracht. Hierfür sind aus dem Stand der Technik Antriebsstrangmodule bekannt, bei denen elektrische Kurbelwellen-Startergeneratoren (KSG) zwischen Motor und Getriebe vorgesehen sind. Dies sind auf der Kurbelwelle sitzende elektrische Maschinen mit Starter- und Generatorfunktion, die gemeinhin als Kurbelwellen-Startergeneratoren bezeichnet werden, wegen der direkten Anbindung ihres Rotors mit der Kurbelwelle der Brennkraftmaschine.

Der KSG-Rotor ist mit dem auf der Kurbelwelle angeordneten Schwungrad verbunden. Auf diese Weise steht er in Wirkverbindung mit der Kurbelwelle. Die verbundene Anordnung aus Schwungrad und Rotor weist dabei im Vergleich zu einem Schwungrad ohne Rotor eine höhere Masse auf. Zudem ist der Abstand des Schwerpunkts dieser Anordnung zur Lagerstelle der Kurbelwelle im Vergleich zu einem Schwungrad ohne Rotor vergrößert.

Insbesondere aufgrund der beiden vorgenannten Aspekte wirken sich Bauteilelastizitäten und erforderliche Toleranzen in Bezug auf radiale Bewegungen verstärkt aus. Dies wiederum bedingt einen entsprechend großen Spalt zwischen dem Rotor und dem Stator des KSGs. Eine vergrößerte Spalthöhe wirkt sich jedoch negativ auf den Wirkungsgrad des KSGs aus.

Es ist somit eine Aufgabe der Erfindung, ein verbessertes Antriebsstrangmodul mit einem Kurbelwellen-Startergenerator und einem Schwungrad bereitzustellen, mit dem Nachteile herkömmlicher derartiger Antriebsstrangmodule vermieden werden können. Die Aufgabe der Erfindung ist es insbesondere, ein Antriebsstrangmodul bereitzustellen, bei dem die Spalte zwischen Rotor und Stator des KSGs kleiner ausgeführt werden kann.

Diese Aufgaben werden durch ein Antriebsstrangmodul mit den Merkmalen des Hauptanspruchs gelöst. Vorteilhafte Ausführungen und Anwendungen der Erfindung sind Gegenstand der abhängigen Ansprüche und werden in der folgenden Beschreibung unter teilweiser Bezugnahme auf die Figuren näher erläutert.

Das erfindungsgemäße Antriebsstrangmodul für ein Kraftfahrzeug, insbesondere für ein Nutzfahrzeug, umfasst in Übereinstimmung mit dem Stand der Technik ein mit der Kurbelwelle verbundenes Schwungrad, einen mit der Kurbelwelle wirkverbundenen Kurbelwellen-Startergenerator (KSG), aufweisend einen Rotor und einen Stator, und einen am Schwungrad angeordneten Zahnkranz sowie einen elektrischen Startermotor mit einem Anlasserritzel, das zum Drehen des Zahnkranzes mit diesem in Eingriff bringbar ist und/oder im Eingriff steht.

Gemäß allgemeinen Gesichtspunkten der Erfindung ist das Anlasserritzel in einer Radialrichtung, die senkrecht zur Kurbelwellenachse ist, versetzt zu dem Rotor und dem Stator des KSGs angeordnet.

Mit anderen Worten ist das Antriebsstrangmodul so ausgebildet, dass der benötige (Frei-) Raum für das Anlasserritzel des Startermotors radial außerhalb des radialen Bauraums bzw. der radialen Erstreckung des Rotors und Stators angeordnet ist. Das Schwungrad kann insbesondere mit einer Aufnahmestelle für den Zahnkranz versehen sein und hierzu derart geformt sein, dass ein Hohlraum zur Aufnahme des Anlasserritzels innerhalb eines Schwungradgehäuses gebildet wird, so dass das Anlasserritzel des konventionellen Starters in dem Hohlraum in der Radialrichtung versetzt und damit nicht auf gleicher Höhe zu dem Rotor und dem Stator des Kurbelwellen-Startergenerators angeordnet werden kann.

Dies bietet den besonderen Vorteil, dass der Rotor und der Stator näher an die Lagerstelle der Kurbelwelle positioniert werden können, wodurch sich der Abstand des Schwerpunkts des verbundenen Systems aus Schwungrad und Rotor zur Lagerstelle der Kurbelwelle verkleinert. Folglich sind radiale Bewegungen aufgrund von Bauteilelastizitäten reduziert, so dass die Spalthöhe zwischen Stator und Rotor kleiner ausgelegt werden kann, was dem Wirkungsrad des Kurbelwellen-Startergenerators erhöht.

Der vorgenannte elektrische Startermotor stellt einen konventionellen elektrischen Starter dar, der zusätzlich zum KSG bereitgestellt wird, insbesondere um den KSG bei Extrembedingungen und/oder einem Kaltstart zu unterstützen. Dadurch kann der KSG als die wesentlich kostenaufwändigere Komponente kleiner ausgelegt werden.

Der auf dem Schwungrad angeordnete Zahnkranz, nachfolgend auch als Anlasserzahnkranz bezeichnet, ist fest auf einem die Kurbelwellenachse konzentrisch umgebenden Bereich des Schwungrads angeordnet, um die Drehbewegung des Startermotors auf das Schwungrad zu übertragen.

Erfindungsgemäß ist das Anlasserritzel in Radialrichtung näher als der Rotor und/oder der Stator an der Kurbelwellenachse angeordnet. Dies ermöglicht eine baulich besonders kompakte Realisierung des Antriebsstrangmoduls. Weiterhin kann ein Radius des Zahnkranzes kleiner als ein Radius des Rotors und/oder ein Radius des Stators sein, was ebenfalls zu einer baulich besonders kompakten Realisierung führt.

Im Rahmen der Erfindung besteht jedoch auch die Möglichkeit, das Anlasserritzel in Radialrichtung weiter entfernt als der Rotor und/oder der Stator an der Kurbelwelle anzuordnen bzw. den Radius des Zahnkranzes größer als den Radius des Rotors und/oder den Radius des Stators auszuführen. Dies führt zu einer in Radialrichtung baulich vergrößerten Anordnung und ist deshalb in Bezug auf den benötigten radialen Bauraum weniger vorteilhaft als die vorgenannte Ausführungsvariante. Dennoch bietet auch diese Ausführungsvariante den Vorteil von verringerten radialen Schwingungen, da durch den freigewordenen Bauraum auf Höhe des Rotors und/oder Stators der Abstand dieser Komponenten bzw. des Schwerpunkts des beweglichen Systems aus Rotor und Schwungrad zum Kurbelwellenlager verringert werden kann. Diese Variante kann insbesondere vorteilhaft sein, wenn aufgrund einer vorgegebenen Anordnung weiterer Antriebsstrangkomponenten der verfügbare Bauraum für eine Anordnung des Anlasserritzels unterhalb des Rotors bzw. Stators nicht ausreichend ist.

Das Schwungrad kann einen äußeren Randbereich, an dem der Rotor fest angeordnet ist, und einen Mittenbereich, der an der Kurbelwelle befestigt ist, aufweisen. Vorzugsweise ist hierbei der äußere Randbereich axial versetzt zu dem Mittenbereich angeordnet. Unter axial versetzt wird in dieser Beschreibung eine in Richtung der Kurbelwellenachse (Kurbelwellenlängsachse) versetzte Anordnung verstanden.

Bei einer vorteilhaften Variante dieser Ausgestaltungsform kann der Mittenbereich im Querschnitt, d. h. in Querschnittsansicht, eine Stufe aufweisen, wobei der Zahnkranz an der Stufe angeordnet ist. Mit anderen Worten hat der Mittenbereich an zumindest einer Stelle einen die Kurbelwellenachse umlaufenden Knick, eine Stufe und/oder einen S-förmigen Bereich, an dem der Zahnkranz stabil angeordnet werden kann und ist. Die Stelle dieses Knicks liegt in Radialrichtung zwischen dem äußeren Randbereich und der Mittelachse der Kurbelwelle, so dass der Radius des Zahnkranzes kleiner als der Radius des Rotors ausgeführt werden kann und der Anlasserzahnkranz entsprechend radial versetzt daran anordenbar ist.

Der Mittenbereich kann somit zwei im Wesentlichen radial oder schräg radial verlaufende Abschnitte umfassen, die durch einen im Wesentlichen axial verlaufenden Verbindungsbereich verbunden sind, wobei der Zahnkranz auf dem Verbindungsbereich angeordnet ist.

Gemäß einer bevorzugten Ausgestaltungsform ist das Schwungrad becherförmig ausgebildet, aufweisend einen hohlzylinderförmigen äußeren Randbereich, der sich getriebeseitig erstreckt und auf dem der Rotor fest angeordnet ist, und ein Bodenelement, entsprechend dem vorgenannten Mittenbereich, das an der Kurbelwelle befestigt ist und an dem der äußere Randbereich angeformt ist, wobei der Zahnkranz am Bodenelement befestigt ist. Die becherförmige Ausgestaltung des Schwungrads ist besonders vorteilhaft für eine konzentrische Anordnung von Rotor und Stator mit dazwischen liegendem zylindrischen Luftspalt.

Gemäß einer vorteilhaften Variante dieser Ausgestaltungsform kann am motorseitigen Außenbereich des Bodenelements eine die Kurbelwellenachse konzentrisch umgebende kreisförmige Kante angeformt sein, an der der Zahnkranz befestigt ist, wobei der Zahnkranz als Innenläufer ausgebildet ist. Gemäß dieser Variante wird zwischen der kreisförmigen Kante und der Befestigungsstelle des Schwungrads an der Kurbelwelle ein Hohlraum bzw. eine Tasche ausgebildet, in dem/der das Anlasserritzel angeordnet werden kann. Gemäß dieser Variante kann das Anlasserritzel in Radialrichtung besonders nah an der Kurbelwellenachse positioniert werden.

Bei der becherförmigen Ausgestaltung des Schwungrads können der Rotor und der Stator konzentrisch in unterschiedlichen radialen Abständen zur Kurbelwellenachse angeordnet werden, so dass zwischen dem Rotor und dem Stator ein zylindrischer Luftspalt gebildet wird und der Stator an einer Innenseite eines Gehäuses des KSGs befestigt ist.

Im Rahmen der Erfindung besteht jedoch auch die Möglichkeit, dass der Stator axial versetzt zum Rotor angeordnet ist, so dass ein ringscheibenförmiger Luftspalt zwischen dem Stator und dem Rotor ausgebildet wird. Vorzugsweise ist der Zahnkranz gemäß dieser Variante als Außenläufer ausgebildet und wiederum auf einer umlaufenden Kante bzw. einem Knick des Mittenbereichs des Schwungrads befestigt.

Ein besonderer Vorzug dieser Ausführungsvariante liegt darin, dass der Kurbelwellen-Startergenerator in das Schwungradgehäuse integriert sein kann. Hierbei kann der Stator an der Innenseite des Schwungradgehäuses befestigt sein. Dadurch kann auf ein separates KSG-Gehäuse verzichtet werden.

Das Antriebsstrangmodul kann für alle vorgenannten Ausführungsvarianten ein das Schwungrad zumindest teilweise umgebendes Schwungradgehäuse aufweisen, wobei das Schwungradgehäuse ferner den Zahnkranz und das Anlasserritzel und gegebenenfalls auch den elektrischen Startermotor umgibt.

Die Erfindung betrifft ferner ein Fahrzeug, insbesondere ein Nutzfahrzeug, umfassend ein Antriebsstrangmodul gemäß einem der vorhergehenden Aspekte.

Weitere Einzelheiten und Vorteile der Erfindung werden im Folgenden unter Bezug auf die beigefügten Zeichnungen beschrieben. Es zeigen:
- Figur 1: eine Schnittansicht eines aus dem Stand der Technik bekannten Antriebsstrangmoduls;
- Figur 2: eine Schnittansicht eines Antriebsstrangmoduls gemäß einem ersten Ausführungsbeispiel;
- Figur 3: eine Schnittansicht eines Antriebsstrangmoduls gemäß einem zweiten Ausführungsbeispiel; und
- Figur 4: eine Schnittansicht eines Antriebsstrangmoduls gemäß einem dritten Ausführungsbeispiel.

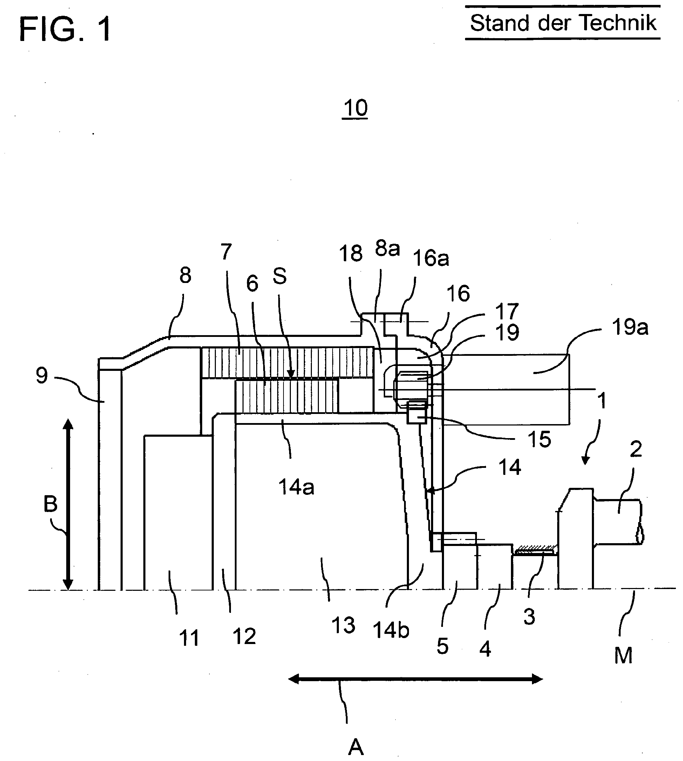

In den Figuren 1 bis 4 ist jeweils nur die obere Hälfte des Antriebsstrangmoduls in einer Schnittansicht gezeigt.

Figur 1 zeigt ein bekanntes Antriebsstrangmodul für ein Nutzfahrzeug. Die Mittellinie der Kurbelwelle ist mit der strichgepunkteten Linie M dargestellt. Von der Kurbelwelle 1 ist in Figur 1 nur ein Teil sichtbar, insbesondere das Kurbelwellenlager 3, ein Pleuelzapfen 2 zur Aufnahme der Pleuelstange, ein Flanschbereich 4 sowie ein Zahnrad 5. Über das Zahnrad 5 kann die Nockenwelle über ein vorgegebenes Übersetzungsverhältnis angesteuert werden.

Mit der Kurbelwelle 1 ist das Schwungrad 14 verbunden, das becherförmig ausgestaltet ist. Das Schwungrad 14 umfasst einen hohlzylinderförmigen äußeren Randbereich 14a, der sich getriebeseitig erstreckt und auf dem der ringförmige Rotor 6 eines Kurbelwellen-Startergenerators drehfest angeordnet ist. Das abtriebsseitige Getriebe, in Figur 1 links von dem Antriebsstrangmodul 10 angeordnet, ist nicht gezeigt.

Das Schwungrad 14 umfasst ferner einen Mittenbereich 14b, an dem das Schwungrad 14 an der Kurbelwelle 1 befestigt ist und der bei einer becherförmigen Ausgestaltung des Schwungrads 14 den Boden ausbildet. Das becherförmige Schwungrad 14 bildet somit einen Hohlraum 13 aus, der mit einem Deckel 12 verschlossen werden kann.

Die getriebeseitigen Anbindung des Schwungrads 14 erfolgt über eine herkömmliche, aus dem Stand der Technik bekannte Kopplungseinrichtung 11, die in Figur 1 lediglich schematisch dargestellt ist. Derartige Kopplungseinrichtungen, z. B. Kupplung, Adapterplatten, Flexplatten etc. sind aus dem Stand der Technik bekannt und werden hier nicht weiter beschrieben.

Von dem Kurbelwellen-Startergenerator sind in Figur 1 nur das Gehäuse 8, 9 sowie der ringförmige Stator 7 und der Rotor 6 dargestellt. Die weiteren Komponenten, wie z. B. elektrische Anschlüsse, mögliche Kühlleitungen etc., die in herkömmlicher Weise ausgeführt sein können, sind zur Vereinfachung der Darstellung nicht gezeigt.

Vorstehend wurde bereits erwähnt, dass der Rotor 6 auf dem äußeren Randbereich 14a des Schwungrads umfangsseitig angeordnet ist. Der Stator 7 ist hierzu radial versetzt an einer Innenseite des KSG-Gehäuses 8 fest angeordnet. In Radialrichtung ist der Rotor 6 von dem Stator 7 durch einen Spalt S beabstandet. Der Spalt S soll aus Wirkungsgradgründen möglichst klein sein, muss aber zumindest so groß ausgelegt werden, dass aufgrund von auftretenden radialen Schwingungen der Anordnung aus Rotor 6 und Schwungrad 14 der Rotor 6 nicht im Betrieb an die gegenüberliegende Statorfläche anstößt.

Das KSG-Gehäuse 8 und das Schwungradgehäuse 16 sind über entsprechende Flanschbereiche 8a bzw. 16a miteinander verbunden, beispielsweise verschraubt.

In Radialrichtung auf gleicher Höhe wie der Stator 6 ist an der äußeren Bodenkante des Schwungrads 14 ein Anlasserzahnkranz 15 angeordnet. Über dem Anlasserzahnkranz 15 wird auf gleicher Höhe des Rotors 6 und des Stators 7 ein Hohlraum 17, 18 ausgebildet, in dem ein Anlasserritzel 19 eines herkömmlichen elektrischen Startermotors 19a angeordnet ist. Das vom Startermotor 19a angetriebene Anlasserritzel 19 greift zum Starten des Motors in den Anlasserzahnkranz 15 ein und bewirkt somit eine Rotation des Schwungrads 14. Da der Hohlraum 17, 18 für das Anlasserritzel 19 benötigt wird, steht dieser Bereich nicht zur Anordnung des Stators 7 und/oder Rotors 6 zur Verfügung.

Der Pfeil B gibt den Radius des Anlasserzahnkranzes 15 an und entspricht auch der vorgenannten Radialrichtung. Der Pfeil A gibt den Abstand von der Mitte des Rotors 6 zum Kurbelwellenlager 3 an.

Ein Antriebsstrangmodul, bei dem das Anlasserritzel versetzt zu dem Stator und Rotor des Kurbelwellen-Startergenerators angeordnet ist, ist ferner aus der EP 1 355 062 A2 bekannt.

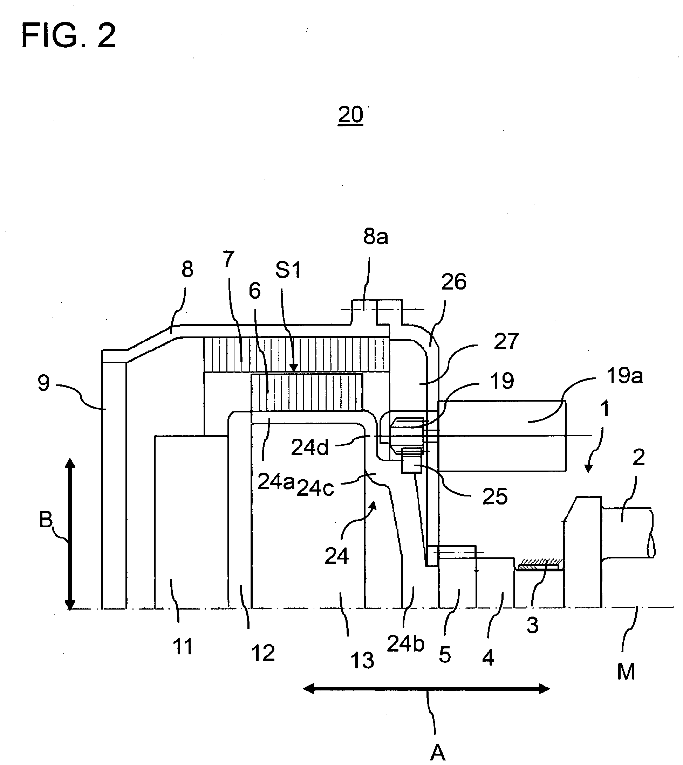

Die Figur 2 zeigt ein erstes Ausführungsbeispiel der Erfindung. Hierbei entsprechen Komponenten mit gleichen Bezugszeichen den Komponenten der Figur 1 und werden nicht gesondert beschrieben.

Gemäß dieser Ausführungsvariante des Antriebsstrangmoduls 20 ist das Schwungrad 24 wiederum becherförmig ausgebildet, aufweisend einen hohlzylinderförmigen äußeren Randbereich 24a, der sich getriebeseitig erstreckt und auf dem der Rotor 6 fest angeordnet ist, und ein Bodenelement 24b, 24c, 24d, das an der Kurbelwelle 1 befestigt ist und an dem der äußere Randbereich 24a angeformt ist.

Die Besonderheit des Ausführungsbeispiels besteht nun darin, dass das Bodenelement im Querschnitt eine Stufe 24c bzw. umlaufende Kante aufweist, wobei der Anlasserzahnkranz 25 an der Stufe 24c angeordnet ist. Der Boden besteht somit im Wesentlichen aus einem ersten schräg radial verlaufenden Abschnitt 24b und einem zweiten radial verlaufenden Abschnitt 24d, die durch einen im Wesentlichen axial verlaufenden Verbindungsbereich 24c verbunden sind. Die umlaufende Kante 24c bietet eine stabile Aufnahmefläche für den Anlasserzahnkranz 25 aus, der somit mit einem kleineren Radius im Vergleich zum Antriebsstrangmodul der Figur 1 ausgeführt werden kann. Dadurch kann das Anlasserritzel 19 in Axialrichtung näher als der Rotor 6 und näher als der Stator 7 an der Kurbelwellenachse M angeordnet werden. Dadurch wird der Hohlraum 27 zwischen dem Anlasserzahnkranz 25 und dem oberen Ende des Schwungradgehäuses 26 auf Höhe des Rotors 6 und Stators 7 nicht mehr von dem Anlasserritzel 19 benötigt, so dass der Rotor 6 und der Stator 7 in Axialrichtung näher an das Kurbelwellenlager 3 herangerückt werden können.

Beispielsweise nimmt der Stator 7 nun den in Figur 1 freigelassenen Bereich 18 ein und kann so näher an das Kurbelwellenlager 3 herangerückt werden, wodurch sich der Abstand A zum Kurbelwellenlager verkleinert. Dadurch ist der Abstand des Schwerpunkts der Anordnung aus Schwungrad 24 und Rotor 6 zum Kurbelwellenlager 3 verkleinert, wodurch sich die aufgrund von Bauteilelastizitäten Bewegungen dieser Anordnung reduzieren, insbesondere auch die radialen Bewegungen, so dass der Spalt S1 zwischen Rotor 6 und Stator 7 im Vergleich zu Figur 1 kleiner ausgelegt werden kann, so dass sich der Wirkungsgrad der Anordnung vergrößert.

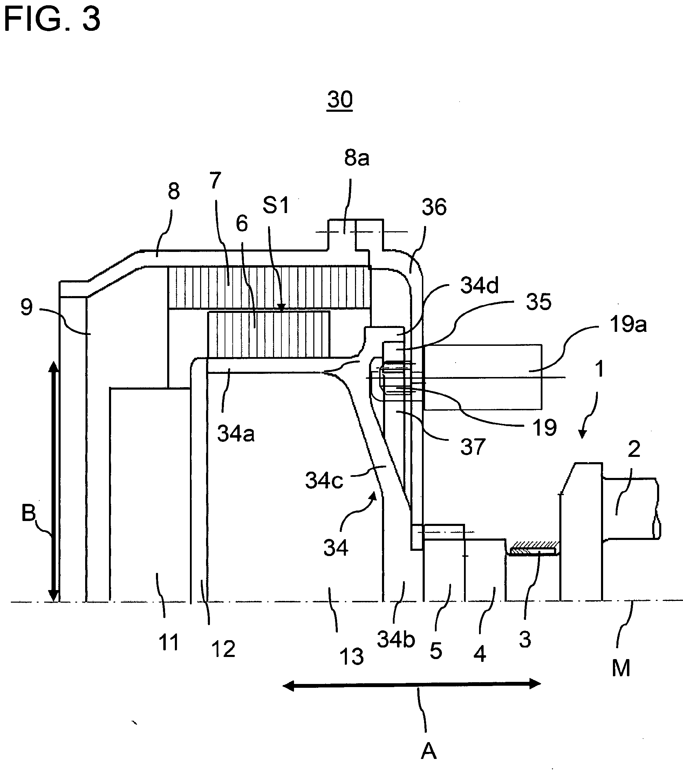

Figur 3 zeigt eine weitere Ausführungsvariante des Antriebsstrangmoduls 30. Hierbei entsprechen Komponenten mit gleichen Bezugszeichen den Komponenten der Figur 1 und werden nicht gesondert beschrieben.

Das Schwungrad 34 ist wiederum becherförmig ausgebildet mit einem äußeren Randbereich 34a, an dem der Rotor 6 umfangsseitig befestigt ist, und einem Bodenelement 34b, 34c mittels dessen das Schwungrad 34 an der Kurbelwelle 1 befestigt ist. Das Bodenelement weist einen festen inneren Abschnitt 34b auf, der sich radial von der Kurbelwellenachse M weg erstreckt, an dem sich ein zweiter schräg radial verlaufender Abschnitt 34c anschließt, an dem endseitig der äußere Bereich 34a in Axialrichtung angeformt ist.

Am motorseitigen Außenbereich des Bodenelements 34b, 34c ist am Ende des Abschnitts 34c eine die Kurbelwellenachse M konzentrisch umgebende kreisförmige Kante 34d angeformt, an dem der Anlasserzahnkranz 35 befestigt ist, der im Unterschied zu den Figuren 1 und 2 nicht als Außenläufer, sondern nun als Innenläufer ausgebildet ist.

Durch den radial schräg verlaufenden zweiten Abschnitt 34c des Bodenelements bildet sich ein Hohlraum 37 zwischen der Kante 34d und dem radial inneren Abschnitt 34b des Bodenelements aus. In diesem Hohlraum 37 ist das Anlasserritzel 19 vorgesehen, das zum Starten des Motors in Eingriff mit dem Anlasserzahnkranz 35 gebracht wird.

Auch in dieser Variante ist somit das Anlasserritzel 19 radial versetzt in Bezug auf den Rotor 6 und den Stator 7 angeordnet, und zwar in Richtung der Kurbelwellenachse M. Dadurch kann wiederum der Stator 7 näher an das Kurbelwellenlager 3 gerückt werden, wodurch sich der Abstand A wiederum verkleinert, so dass auch in diesem Fall der Spalt S1 zwischen Rotor 6 und Stator 7 verkleinert ausgeführt werden kann.

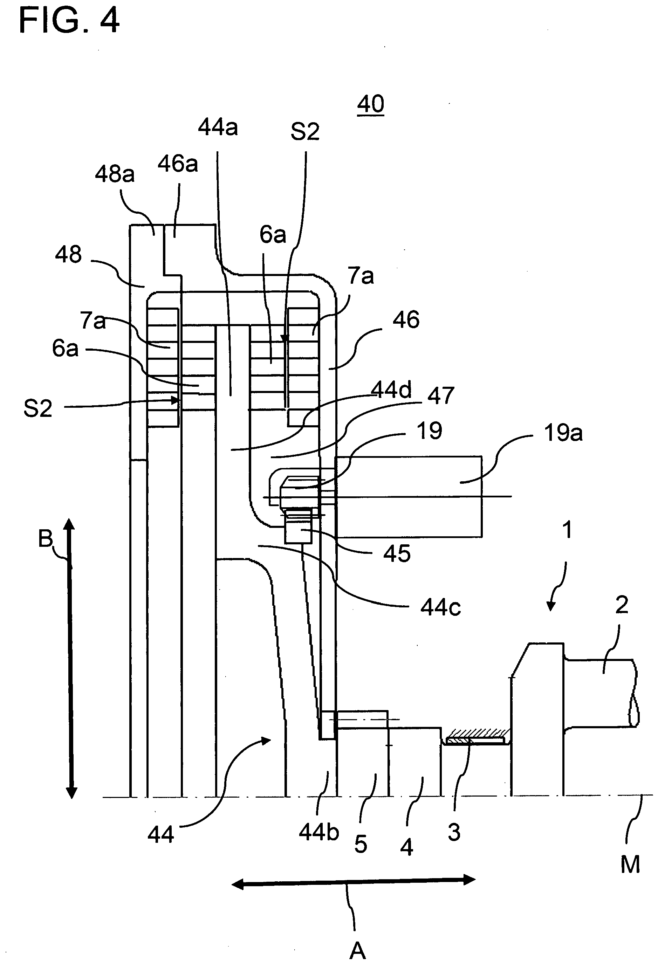

Figur 4 zeigt ein drittes Ausführungsbeispiel des Antriebsstrangmoduls 40. Die Besonderheit des Ausführungsbeispiels liegt darin, dass der Stator 7a axial versetzt zum Rotor 6a angeordnet ist, so dass ein ringscheibenförmiger Luftspalt S2 jeweils zwischen dem Stator 7a und dem Rotor 6a ausgebildet wird. Hierzu weist das Schwungrad 44 wiederum einen äußeren Randbereich 44a auf, an dem der Rotor 6a beidseitig scheibenringförmig drehfest angeordnet ist. Gegenüberliegend zu den beiden Rotorelementen 6a ist jeweils ein Statorring 7a angeordnet. Ein Statorring 7a ist an dem motorseitigen Schwungradgehäuse 46 befestigt, während der andere Statorring 7a an einem getriebeseitigen Schwungradgehäusedeckel 48 (Adapter) oder am Getriebeflansch selbst befestigt ist. Das Schwungradgehäuse 46 und der Schwungradgehäusedeckel 48 sind über entsprechende Flanschelemente 46a, 48a aneinander befestigt.

Der besondere Vorzug dieses Ausführungsbeispiels liegt somit auch darin, dass auf ein separates KSG-Gehäuse verzichtet werden kann.

Das Schwungrad 44 umfasst ferner einen Mittenbereich 44b, 44c, 44d mit einem inneren Abschnitt 44b, der sich schräg radial erstreckt und über den das Schwungrad 44 an der Kurbelwelle 1 befestigt ist. An dem ersten inneren Abschnitt 44b ist ein axial verlaufender zweiter Abschnitt 44c angeformt, an den sich wiederum radial erstreckend ein dritter-Abschnitt 44d anschließt, der in den äußeren Randbereich 44a übergeht. Der axiale Abschnitt 44c bildet somit wiederum eine umlaufende Kante bzw. Stufe aus, auf der der Anlasserzahnkranz 45 mit kleinerem Radius als der Rotor 6a und der Stator 7a angeordnet werden kann. Auch diese Variante ermöglicht eine besonders nahe Anordnung des Rotors 6a und des Stators 7a an dem Kurbelwellenlager 3, so dass Schwingungen des Rotors 6a und des Stators 7a im Betrieb im Vergleich zu der Anordnung in Figur 1 reduziert werden können.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, um eine bestimmte Situation oder ein bestimmtes Material an die Lehre der Erfindung anzupassen, ohne den zugehörigen Bereich zu verlassen. Folglich soll die Erfindung nicht auf das offen-barte bestimmte Ausführungsbeispiel begrenzt sein, sondern die Erfindung soll alle Ausführungsbeispiele umfassen, die in den Bereich der beigefügten Patentansprüche fallen.

### Bezugszeichenliste

- 1: Kurbelwelle
- 2: Pleuelzapfen der Kurbelwelle
- 3: Kurbelwellenlager
- 4: Flanschelement der Kurbelwelle
- 5: Zahnrad zur Kopplung mit Nockenwelle
- 6, 6a: Rotor des KSG
- 7, 7a: Stator des KSG
- 8,9: KSG-Gehäuse
- 8a: Flanschelement des KSG-Gehäuses
- 10: Bekanntes Antriebsstrangmodul
- 11: Getriebekopplungselement
- 12: Abdeckung
- 13: Hohlraum
- 14: Schwungrad
- 14a: Äußerer Randbereich des Schwungrads
- 14b: Mittenbereich des Schwungrads
- 15: Anlasserzahnkranz
- 16: Schwungradgehäuse
- 16a: Flanschelement des Schwungradgehäuses
- 17, 18: Hohlraum
- 19: Anlasserritzel
- 19a: Startermotor
- 20: Ausführungsvariante eines Antriebsstrangmoduls
- 24: Schwungrad
- 24a: Äußerer Bereich des Schwungradgehäuses
- 24b: Innerer Bereich des Bodens des Schwungradgehäuses
- 24c: Umlaufkante
- 24d: Äußerer Bereich des Bodenelements des Schwungradgehäuses
- 25: Anlasserzahnkranz
- 26: Schwungradgehäuse
- 27: Hohlraum
- 30: Ausführungsvariante eines Antriebsstrangmoduls
- 34: Schwungradgehäuse
- 34a: Äußerer Randbereich des Schwungradgehäuses
- 34b: Innerer Abschnitt des Bodenelements des Schwungradgehäuses
- 34c: Äußerer Abschnitt des Bodenelements des Schwungradgehäuses
- 34d: Kreisförmige Kante
- 35: Anlasserzahnkranz
- 36: Schwungradgehäuse
- 37: Hohlraum
- 40: Ausführungsvariante eines Antriebsstrangmoduls
- 44: Schwungrad
- 44a: Äußerer Randbereich des Schwungrad
- 44b: Innerer Bereich des Schwungrads
- 44c: Umlaufende Kante
- 44d: Äußerer Bereich des Mittenbereichs des Schwungrads
- 45: Anlasserzahnkranz
- 46: Schwungradgehäuse
- 46a: Flanschelement des Schwungradgehäuses
- 47: Hohlraum
- 48: Schwungradgehäusedeckel
- 48a: Flanschelement des Schwungradgehäusedeckels
- A: Abstand Mitte Rotor zum Kurbelwellenlager
- B: Radius des Anlasserzahnkranzes
- M: Mittellinie der Kurbelwelle (Kurbelwellenachse)
- S, S1, S2: Spalt zwischen Rotor und Stator

## Patentansprüche

1. Antriebsstrangmodul (20; 30; 40) für ein Kraftfahrzeug, umfassend ein mit der Kurbelwelle (1) verbundenes Schwungrad (24; 34; 44);
einen mit der Kurbelwelle (1) wirkverbundenen Kurbelwellen-Startergenerator, aufweisend einen Rotor (6) und einen Stator (7);
einen am Schwungrad (24; 34; 44) angeordneten Zahnkranz (25; 35; 45) und einen elektrischen Startermotor (19a) mit einem Anlasserritzel (19), das zum Drehen des Zahnkranzes (25; 35; 45) mit diesem in Eingriff bringbar ist und/oder im Eingriff steht,
wobei das Anlasserritzel (19) in einer Radialrichtung, die senkrecht zur Kurbelwellenachse (M) ist, versetzt zu dem Rotor (6) und dem Stator (7) des Kurbelwellen-Startergenerators angeordnet ist, **dadurch gekennzeichnet, dass** das Anlasserritzel (19) in Radialrichtung näher als der Rotor (6) und näher als der Stator (7) an der Kurbelwellenachse (M) angeordnet ist.

2. Antriebsstrangmodul (20; 30; 40) nach Anspruch 1, **dadurch gekennzeichnet, dass** ein Radius des Zahnkranzes (25; 35; 45) kleiner als ein Radius des Rotors (6) und/oder ein Radius des Stators (7) ausgeführt ist.

3. Antriebsstrangmodul (20; 30; 40) nach einem der vorhergehenden Ansprüche, **dadurch gekennzeichnet, dass** das Schwungrad (24; 34; 44) einen äußeren Randbereich (24a; 34a; 44a), an dem der Rotor (6) fest angeordnet ist, und einen Mittenbereich (24b, 24c, 24d; 34b, 34c; 44b, 44c, 44d), der an der Kurbelwelle (1) befestigt ist, aufweist.

4. Antriebsstrangmodul (20; 40) nach Anspruch 3, **dadurch gekennzeichnet, dass** der Mittenbereich (24b, 24c, 24d; 44b, 44c, 44d) im Querschnitt eine Stufe (24c, 44c) aufweist, wobei der Zahnkranz (25; 45) an der Stufe (24c, 44c) angeordnet ist.

5. Antriebsstrangmodul (20; 40) nach Anspruch 3 oder 4, **dadurch gekennzeichnet, dass** der Mittenbereich (24b, 24c, 24d; 44b, 44c, 44d) zwei im Wesentlichen radial oder schräg radial verlaufende Abschnitte (24b, 24d; 44b, 44d) umfasst, die durch einen im Wesentlichen axial verlaufenden Verbindungsbereich (24c; 44c) verbunden sind, wobei der Zahnkranz (25; 45) auf dem Verbindungsbereich (24c; 44c) angeordnet ist.

6. Antriebsstrangmodul (20; 30) nach einem der vorhergehenden Ansprüche, **dadurch gekennzeichnet, dass** das Schwungrad (24; 34) becherförmig ausgebildet ist, aufweisend einen hohlzylinderförmigen äußeren Randbereich (24a; 34a), der sich getriebeseitig erstreckt und auf dem der Rotor (6) fest angeordnet ist, und ein Bodenelement (24b, 24c, 24d; 34b, 34c), das an der Kurbelwelle (1) befestigt ist und an dem der äußere Randbereich (24a; 34a) angeformt ist, wobei der Zahnkranz (15; 35) am Bodenelement (24b, 24c, 24d; 34b, 34c) befestigt ist.

7. Antriebsstrangmodul (30) nach Anspruch 6, wenn abhängig von Anspruch 3, **dadurch gekennzeichnet, dass**
am motorseitigen Außenbereich des Bodenelements eine die Kurbelwellenachse (M) konzentrisch umgebende kreisförmige Kante (34d) angeformt ist, an der der Zahnkranz (35) befestigt ist, wobei der Zahnkranz (35) als Innenläufer ausgebildet ist.

8. Antriebsstrangmodul (20; 30) nach einem der vorhergehenden Ansprüche, **dadurch gekennzeichnet, dass** zwischen dem Rotor (6) und dem Stator (7) ein zylindrischer Luftspalt (S1) gebildet ist und der Stator (7) an einer Innenseite eines Gehäuses (8) des Kurbelwellen-Startergenerators befestigt ist.

9. Antriebsstrangmodul (40) nach einem der Ansprüche 3 bis 5, **dadurch gekennzeichnet, dass** der Stator (7) axial versetzt zum Rotor (6) angeordnet ist, so dass ein ringscheibenförmiger Luftspalt (S2) zwischen dem Stator (7) und dem Rotor (6) ausgebildet wird.

10. Antriebsstrangmodul (40) nach Anspruch 9, **dadurch gekennzeichnet,**
(a) **dass** der Kurbelwellen-Startergenerator in das Schwungradgehäuse (46, 48) integriert ist; und/oder
(b) **dass** der Stator (7) an einer Innenseite des Schwungradgehäuses (46, 48) befestigt ist.

11. Antriebsstrangmodul nach einem der vorhergehenden Ansprüche, **dadurch gekennzeichnet, dass** das Antriebsstrangmodul (20; 30; 40) ein das Schwungrad (24; 34; 44) zumindest teilweise umgebendes Schwungradgehäuse (26; 36; 46, 48) aufweist, wobei das Schwungradgehäuse (26; 36; 46, 48) ferner den Zahnkranz (25; 35; 45) und das Anlasserritzel (19) umgibt.

12. Fahrzeug, insbesondere Nutzfahrzeug, umfassend ein Antriebsstrangmodul (20; 30; 40) nach einem der vorhergehenden Ansprüche.

## Claims

1. Drivetrain module (20; 30; 40) for a motor vehicle, comprising
a flywheel (24; 34; 44) connected to the crankshaft (1);
a crankshaft starter-generator which is operatively connected to the crankshaft (1) and which has a rotor (6) and a stator (7);
a toothed ring (25; 35; 45), which is arranged on the flywheel (24; 34; 44), and an electric starter motor (19a) with a starter pinion (19) which can be placed in engagement, and/or is in engagement, with the toothed ring (25; 35; 45) in order to rotate the latter,
wherein the starter pinion (19) is arranged offset with respect to the rotor (6) and the stator (7) of the crankshaft starter-generator in a radial direction which is perpendicular to the crankshaft axis (M), **characterized in that** the starter pinion (19) is arranged closer than the rotor (6) and closer than the stator (7) to the crankshaft axis (M) in the radial direction.

2. Drivetrain module (20; 30; 40) according to Claim 1, **characterized in that** a radius of the toothed ring (25; 35; 45) is smaller than a radius of the rotor (6) and/or a radius of the stator (7).

3. Drivetrain module (20; 30; 40) according to either of the preceding claims, **characterized in that** the flywheel (24; 34; 44) has an outer edge region (24a; 34a; 44a), on which the rotor (6) is fixedly arranged, and a central region (24b, 24c, 24d; 34b, 34c; 44b, 44c, 44d), which is fastened to the crankshaft (1).

4. Drivetrain module (20; 40) according to Claim 3, **characterized in that** the central region (24b, 24c, 24d; 44b, 44c, 44d), in cross section, has a step (24c, 44c), wherein the toothed ring (25; 45) is arranged on the step (24c, 44c).

5. Drivetrain module (20; 40) according to Claim 3 or 4, **characterized in that** the central region (24b, 24c, 24d; 44b, 44c, 44d) comprises two substantially radially or obliquely radially running sections (24b, 24d; 44b, 44d) which are connected by a substantially axially running connecting region (24c; 44c), wherein the toothed ring (25; 45) is arranged on the connecting region (24c; 44c).

6. Drivetrain module (20; 30) according to one of the preceding claims, **characterized in that** the flywheel (24; 34) is of cup-shaped form, having a hollow cylindrical outer edge region (24a; 34a) which extends on the transmission side and on which the rotor (6) is fixedly arranged, and having a base element (24b, 24c, 24d; 34b, 34c) which is fastened to the crankshaft (1) and on which the outer edge region (24a; 34a) is integrally formed, wherein the toothed ring (15; 35) is fastened to the base element (24b, 24c, 24d; 34b, 34c).

7. Drivetrain module (30) according to Claim 6, where dependent on Claim 3, **characterized in that** a circular edge (34d) which concentrically surrounds the crankshaft axis (M) is integrally formed on the engine-side outer region of the base element, to which circular edge the toothed ring (35) is fastened, wherein the toothed ring (35) is in the form of an internally toothed ring.

8. Drivetrain module (20; 30) according to one of the preceding claims, **characterized in that** a cylindrical air gap (S1) is formed between the rotor (6) and the stator (7), and the stator (7) is fastened to an inner side of a housing (8) of the crankshaft starter-generator.

9. Drivetrain module (40) according to one of Claims 3 to 5, **characterized in that** the stator (7) is arranged axially offset with respect to the rotor (6), such that an annular disc-shaped air gap (S2) is formed between the stator (7) and the rotor (6).

10. Drivetrain module (40) according to Claim 9, **characterized**
(a) **in that** the crankshaft starter-generator is integrated into the flywheel housing (46, 48); and/or
(b) **in that** the stator (7) is fastened to an inner side of the flywheel housing (46, 48).

11. Drivetrain module according to one of the preceding claims, **characterized in that** the drivetrain module (20; 30; 40) has a flywheel housing (26; 36; 46, 48) which at least partially surrounds the flywheel (24; 34; 44), wherein the flywheel housing (26; 36; 46, 48) furthermore surrounds the toothed ring (25; 35; 45) and the starter pinion (19).

12. Vehicle, in particular utility vehicle, comprising a drivetrain module (20; 30; 40) according to one of the preceding claims.

## Revendications

1. Module de chaîne cinématique (20; 30; 40) pour un véhicule à moteur, comprenant
un volant-moteur (24; 34; 44) assemblé au vilebrequin (1);
un générateur de démarreur du vilebrequin en liaison active avec le vilebrequin (1), présentant un rotor (6) et un stator (7);
une couronne dentée (25; 35; 45) disposée sur le volant-moteur (24; 34; 44) et un moteur électrique de démarreur (19a) avec un pignon de démarreur (19) qui peut être amené et/ou qui se trouve en prise avec la couronne dentée (25; 35; 45) pour faire tourner celle-ci,
dans lequel le pignon de démarreur (19) est disposé de façon décalée par rapport au rotor (6) et au stator (7) dans une direction radiale, qui est perpendiculaire à l'axe du vilebrequin (M), **caractérisé en ce que** le pignon de démarreur (19) est disposé par rapport à l'axe du vilebrequin (M) plus près que le rotor (6) et plus près que le stator (7) en direction radiale.

2. Module de chaîne cinématique (20; 30; 40) selon la revendication 1, **caractérisé en ce qu'**un rayon de la couronne dentée (25; 35; 45) est plus petit qu'un rayon du rotor (6) et/ou qu'un rayon du stator (7).

3. Module de chaîne cinématique (20; 30; 40) selon l'une quelconque des revendications précédentes, **caractérisé en ce que** le volant-moteur (24; 34; 44) présente une région de bord extérieure (24a; 34a; 44a) sur laquelle le rotor (6) est disposé de façon fixe, et une région moyenne (24b, 24c, 24d; 34b, 34c; 44b, 44c, 44d) qui est fixée au vilebrequin (1).

4. Module de chaîne cinématique (20; 40) selon la revendication 3, **caractérisé en ce que** la région moyenne (24b, 24c, 24d; 44b, 44c, 44d) présente en coupe transversale un degré (24c, 44c), dans lequel la couronne dentée (25; 45) est disposée sur le degré (24c, 44c).

5. Module de chaîne cinématique (20; 40) selon la revendication 3 ou 4, **caractérisé en ce que** la région moyenne (24b, 24c, 24d; 44b, 44c, 44d) comprend deux parties s'étendant essentiellement radialement ou radialement en oblique (24b, 24d; 44b, 44d), qui sont reliées par une région de liaison s'étendant essentiellement axialement (24c; 44c), dans lequel la couronne dentée (25; 45) est disposée sur la région de liaison (24c; 44c).

6. Module de chaîne cinématique (20; 30) selon l'une quelconque des revendications précédentes, **caractérisé en ce que** le volant-moteur (24; 34) est réalisé en forme de vase, présentant une région de bord extérieure en forme de cylindre creux (24a; 34a), qui s'étend vers la boîte de vitesses et sur laquelle le rotor (6) est disposé de façon fixe, et un élément de fond (24b, 24c, 24d; 34b, 34c), qui est fixé sur le vilebrequin (1) et sur lequel la région de bord extérieure (24a; 34a) est formée, dans lequel la couronne dentée (15; 35) est fixée sur l'élément de fond (24b, 24c, 24d; 34b, 34c).

7. Module de chaîne cinématique (30) selon la revendication 6, lorsqu'elle dépend de la revendication 3, **caractérisé en ce qu'**un rebord circulaire (34d) entourant de façon concentrique l'axe de vilebrequin (M) est formé sur la région extérieure du côté moteur de l'élément de fond, sur lequel la couronne dentée (35) est fixée, dans lequel la couronne dentée (35) est réalisée sous forme de denture intérieure.

8. Module de chaîne cinématique (20; 30) selon l'une quelconque des revendications précédentes, **caractérisé en ce qu'**un entrefer cylindrique (S1) est formé entre le rotor (6) et le stator (7) et le stator (7) est fixé sur un côté intérieur d'un boîtier (8) du générateur de démarreur du vilebrequin.

9. Module de chaîne cinématique (40) selon l'une quelconque des revendications 3 à 5, **caractérisé en ce que** le stator (7) est disposé en décalage axial par rapport au rotor (6), de telle manière qu'un entrefer en forme de rondelle annulaire (S2) soit formé entre le stator (7) et le rotor (6).

10. Module de chaîne cinématique (40) selon la revendication 9, **caractérisé en ce que**
a) le générateur de démarreur du vilebrequin est intégré dans le boîtier de volant-moteur (46, 48); et/ou
b) le stator (7) est fixé sur un côté intérieur du boîtier de volant-moteur (46, 48).

11. Module de chaîne cinématique selon l'une quelconque des revendications précédentes, **caractérisé en ce que** le module de chaîne cinématique (20; 30; 40) présente un boîtier de volant-moteur (26; 36; 46, 48) entourant au moins partiellement le volant-moteur (24; 34; 44), dans lequel le boîtier de volant-moteur (26; 36; 46, 48) entoure en outre la couronne dentée (25; 35; 45) et le pignon de démarreur (19).

12. Véhicule, en particulier véhicule utilitaire, comprenant un module de chaîne cinématique (20; 30; 40) selon l'une quelconque des revendications précédentes.
